# EUROPEAN PATENT SPECIFICATION

(11) **EP 1 748 162 B1**
(45) Date of publication and mention of the grant of the patent: **10.09.2008**
(21) Application number: 06015778.1
(22) Date of filing: 28.07.2006
(51) Int. Cl.: F01N 3/20, B01D 53/86

(54) **Exhaust aftertreatment system using urea water**
Abgasnachbehandlungssystem unter Verwendung von einer Harnstoff-Wasser-Lösung
Système de post-traitement des gaz d'échappement utilisant une solution urea/eau

(30) Priority: 28.07.2005 JP 2005219090
(43) Date of publication of application: 31.01.2007
(73) Proprietor: HITACHI, LTD., Chiyoda-ku Tokyo 100-8280 (JP); BABCOCK-HITACHI K.K., Chiyoda-ku Tokyo 101-0021 (JP); Hitachi High-Technologies Corporation, Tokyo 105-8717 (JP)
(72) Inventor: Nishioka, Akira, Tokyo 100-8220 (JP); Amou, Kiyoshi, Tokyo 100-8220 (JP); Sukegawa, Yoshihiro, Tokyo 100-8220 (JP); Kowatari, Takehiko, Tokyo 100-8220 (JP); Hamada, Yasunaga, Tokyo 100-8220 (JP); Hamada, Ikuhisa, Chiyoda-ku Tokyo 101-0021 (JP); Mukai, Toshifumi, Kure-shi Hiroshima 737-8508 (JP); Taguchi, Yoshinori, Kure-shi Hiroshima 737-8508 (JP); Yokota, Hiroshi Hitachi High-Technologies Corp., Tokyo 105-8717 (JP)
(74) Representative: Beetz & Partner

(56) References cited:
- EP-A- 0 956 895
- WO-A-03/004839
- DE-A1- 19 934 413
- DE-C1- 19 806 265
- US-A1- 2003 070 424
- US-A1- 2005 069 476
- US-B1- 6 449 947

## Description

### BACKGROUND OF THE INVENTION

### 1. Field of the Invention

The present invention relates to an exhaust aftertreatment system for an engine, and more particularly to an exhaust aftertreatment system which can efficiently remove nitrogen oxides in exhaust gas by using urea water as a reductant (reducing agent).

### 2. Description of the Related Art

In a diesel engine, it has hitherto been proposed to install, midway an exhaust pipe through which exhaust gas flows, a selective reduction catalyst having a property of selectively reacting nitrogen oxides (hereinafter abbreviated to "NOx") with a reductant even in the presence of oxygen. A required amount of reductant (e.g., hydrocarbon, ammonia or a precursor thereof) is dosed upstream of the selective reduction catalyst to develop reaction of the reductant with NOx in the exhaust gas, thereby suppressing the density of exhausted NOx.

Such a NOx reducting method using the selective reduction catalyst is called SCR (Selective Catalytic Reduction). In particular, a method using urea as a reductant is called urea SCR. There is also known a technique for applying the urea SCR to a vehicle (see, e.g., Patent Document 1: JP-A-2000-27627). With that known technique, urea water is stored in a tank and the urea water supplied from the tank is injected into an exhaust passage during operation of the vehicle to hydrolyze urea by utilizing exhaust heat. Produced ammonia acts to reduct NOx.

Further, in one example of known devices for dosing the urea water to the exhaust gas, compressed air and the urea water are mixed and injected to form spray for an improvement in diffusivity of the urea water (see, e.g., Non-Patent Document 1: "Automotive Technology", Vol. 57, No. 9 (2003) pp. 94-99).

In addition, as another example of known devices for dosing the urea water, an injector for atomizing spray of urea water without using compressed air is proposed (see, e.g., Patent Document 2: US Patent No. 6,279,603). With the proposed injector, a hook-shaped member is mounted to the injector, and immediately after injecting the urea water, produced droplets are forced to impinge against the hook-shaped member. A surface of the hook-shaped member against which the droplets impinge is inclined 45° with respect to the direction of injection of the urea water.

### SUMMARY OF THE INVENTION

The SCR device for dosing urea water to exhaust gas and developing the reduction reaction of NOx on a denitration catalyst for cleaning of the exhaust gas is required to satisfy two points, i.e., a first point of quickly hydrolyzing the added urea to produce ammonia and a second point of uniformly dispersing the produced ammonia in the exhaust gas for reaction with NOx on the denitration catalyst.

For satisfying the first point of quickly hydrolyzing the added urea, it is effective to atomize as far as possible when the urea water is injected, and to minimize sizes of individual droplets in the generated spray. As the droplet size decreases, the droplets absorb more heat from the exhaust gas and evaporation of the urea water is more rapidly progressed. In other words, by raising the temperature of the droplets to a level comparable to that of the exhaust gas, hydrolysis reaction of the evaporated urea is promoted.

From the viewpoint of atomizing the injected droplets for that purpose, mixing and injecting the urea water and the compressed air, as described in Non-Patent Document 1, is one effective measure. However, that known technique has drawbacks that, because of supplying air into the exhaust gas, the oxygen density in the exhaust gas is increased, which is contradictory to the aim of promoting the reduction reaction of NOx, and that an energy loss is caused with consumption of the compressed air. Thus, a first problem to be overcome in the exhaust aftertreatment system is to atomize the spray of the urea water without using the compressed air.

For realizing the second point of uniformly dispersing ammonia gas in the exhaust gas, it is conceivable to provide a member causing a venturea backward flow, a swirl or the like in an exhaust gas passage after the urea water has been added, thereby generating a relatively large vortex for agitation. However, such a solution tends to increase a pressure loss as mixing of the urea water is promoted.

An increase of the pressure loss in a flow passage of engine exhaust gas directly leads to a decrease of engine energy efficiency, whereby high energy efficiency, i.e., an advantage of a diesel engine, is lost. Accordingly, a second problem to be overcome in the exhaust aftertreatment system is to uniformly disperse ammonia without increasing the pressure loss of the exhaust gas.

The first problem can be overcome by the method of impinging the urea water against some object immediately after injecting the urea water, as disclosed in Patent Document 2. However, that method has a limitation in droplet size obtained by the atomization because separated droplets may impinge against each other again and may recombine on an impingement surface.

Further, atomization is performed in an injector, e.g., a fuel injector, by increasing fuel injection pressure. Using a similar method is one option. That method is based on a mechanism that, in a process of forming small droplets, a liquid is kept from being torn off by the action of surface tension, and by increasing a liquid injection speed in such an environment, the liquid is torn off by an inertial force resulting from the increased liquid injection speed. In other words, the liquid is atomized by increasing the fuel injection pressure, to thereby increase the speed of the injected liquid and enhance the inertial force to such an extent as overcoming the surface tension that is increased as the droplet size is decreased.

However, the method of atomizing the urea water by increasing the injection pressure is disadvantageous in that an increase of the injection pressure increases the power consumption of an urea water supply pump and hence the energy loss, and that the device size is increased corresponding to an increase of the motor size. Also, when the urea water is injected under high pressure, there is a possibility that, if the inertial force of the droplet is strong, the droplet may penetrate a flow of exhaust gas without being carried with the flow and may deposit on a duct surface. If the droplet deposits on the duct surface, only water of the deposited urea water may evaporate at earlier timing depending on the temperature of the duct surface, and the concentration of the urea water may rise beyond solubility, thus causing solid urea to be kept deposited as a precipitate on the duct surface.

The precipitation of the solid urea may lead to a possibility that, because the precipitated urea is not used as the reductant to treat NOx, the urea water is wasted and the precipitate is transformed to a material having a higher melting point than the solid urea, the material being mixed as a solid in the exhaust gas to increase the density of particulate matters in the exhaust gas, and a possibility that the precipitate in the form of a solid clogs a part of the flow passage of the denitration catalyst. Also, since the solid urea may produce a harmful material when exposed to high-temperature environment, it is desired that urea be promptly converted to ammonia. For those reasons, the droplets of the urea water should be avoided as far as possible from depositing on the duct surface. Thus, from the viewpoint of overcoming the first problem, the spray is preferably atomized without increasing the injection pressure of the urea water.

To overcome the above-described problems, the present invention is constituted as follows.

In an exhaust aftertreatment system comprising an injector for injecting urea water into an engine exhaust duct, and a denitration catalyst disposed downstream of the injector with respect to a flow of exhaust gas, the exhaust aftertreatment system reduces nitrogen oxides in the exhaust gas by the denitration catalyst while using ammonia produced from the urea water injected from the injector. The injector injects the urea water substantially along a direction of the flow of the exhaust gas within the exhaust duct, and a solid object is disposed in a space of the exhaust duct such that droplets of the urea water injected from the injector impinge against the solid object before reaching a wall surface of the exhaust duct.

In the exhaust aftertreatment system, the solid object is a perforated plate arranged obliquely with respect to the flow of the exhaust gas, and a surface of the perforated plate on the side subjected to impingement of the urea water droplets is arranged to face downstream with respect to the flow of the exhaust gas.

Also, in the exhaust aftertreatment system, the perforated plate is a porous plate and disposed in at least two stages in a direction in which the urea water droplets are injected. Further, solid plate is disposed between the porous plates disposed in at least two stages and the wall surface of the exhaust duct.

According to the present invention, when the injected urea water is impinged against the plate, such as the porous plate or the flat plate, disposed in the exhaust gas, spray impingement flux of the urea water at the plate surface is decreased to cause film boiling upon the impingement of the urea water droplets against the plate, thereby preventing deposition of the urea water. Further, since the urea water reflected by the plate is uniformly dispersed into the exhaust gas, reduction reaction can be sufficiently developed by the denitration catalyst.

Also, since the plate, such as the porous plate, the flat plate, or a semi-cylindrical plate, is disposed in the exhaust gas, it is possible to prevent urea from being precipitated on the inner wall surface of the exhaust duct against which the spray injected from the urea water impinges if the plate is not disposed.

### BRIEF DESCRIPTION OF THE DRAWINGS

Fig. 1 is a schematic view showing the overall construction of an exhaust aftertreatment system according to a first embodiment of the present invention;
Fig. 2 is an illustration for explaining a mechanism for preventing deposition of droplets of urea water when the urea water droplets impinge against a porous plate disposed in an exhaust duct in this embodiment;
Fig. 3 is an illustration for explaining spray impingement flux of urea water spray, which is decided depending on the positional relationship between a urea water injector and the porous plate in this embodiment;
Fig. 4 is a graph for explaining, based on the relationship between the spray impingement flux and the temperature of exhaust gas, phenomena occurred when the urea water spray impinges against the porous plate in this embodiment;
Fig. 5 is a schematic view showing the construction of a urea water dosing section in an exhaust aftertreatment system according to a second embodiment of the present invention;
Fig. 6 is a schematic view showing the construction of a urea water dosing section in an exhaust aftertreatment system according to a third embodiment of the present invention;
Fig. 7 is a schematic view showing the construction of a urea water dosing section in an exhaust aftertreatment system according to a fourth embodiment of the present invention;
Fig. 8 is an appearance view showing the practical construction of a urea water dosing section in an exhaust aftertreatment system according to a fifth embodiment of the present invention;
Fig. 9 is a front view showing the practical construction of the urea water dosing section in the fifth embodiment of the present invention;
Fig. 10 is a sectional view taken along line A-A shown in Fig. 9;
Fig. 11 is a sectional view taken along line B-B shown in Fig. 10;
Fig. 12 is a front view showing the construction of a urea water dosing section in an exhaust aftertreatment system according to a sixth embodiment of the present invention;
Fig. 13 is a sectional view taken along line C-C shown in Fig. 12;
Fig. 14 is a schematic view showing the construction of a urea water dosing section in an exhaust aftertreatment system according to a seventh embodiment of the present invention; and
Fig. 15 is a sectional view taken along line D-D shown in Fig. 14.

### DESCRIPTION OF THE PREFERRED EMBODIMENTS

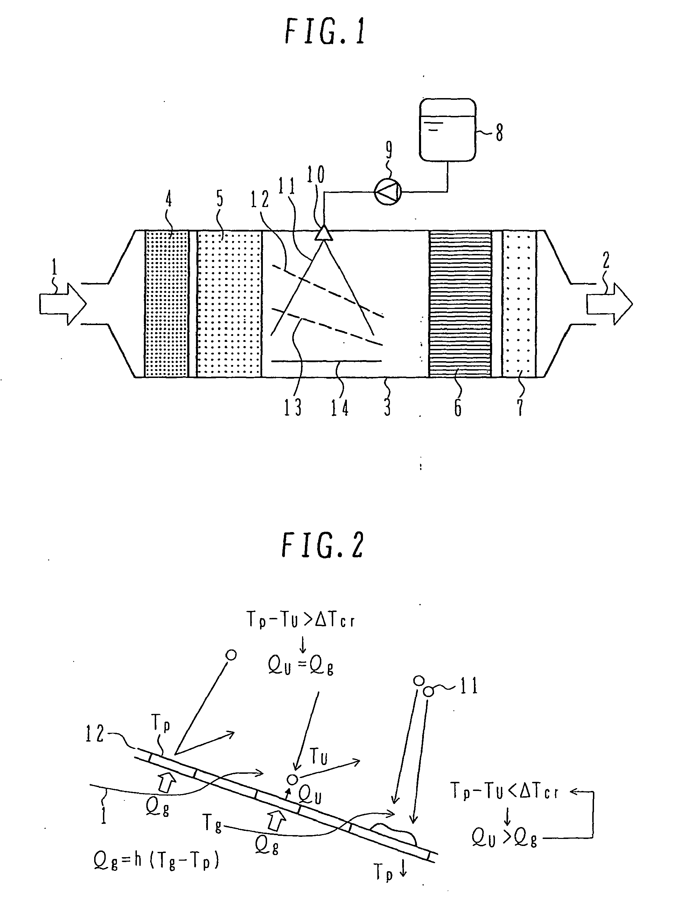

Exhaust aftertreatment systems according to first to seventh embodiments of the present invention will be described below with reference to Figs. 1-15.

### (First Embodiment)

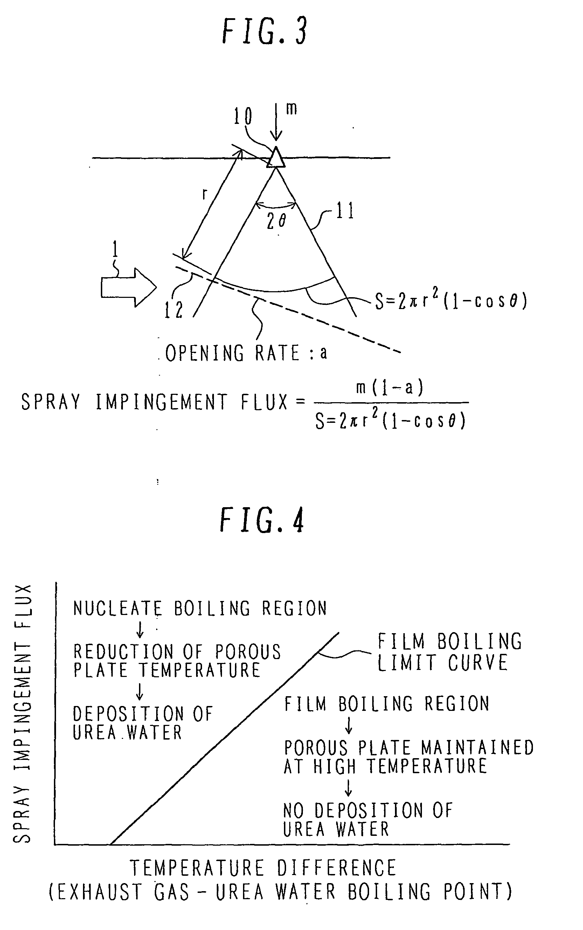

The exhaust aftertreatment systems according to the first embodiment of the present invention will be described below with reference to Figs. 1-4. Fig. 1 is a schematic view showing the overall construction of the exhaust aftertreatment system according to the first embodiment of the present invention. Fig. 2 is an illustration for explaining a mechanism for preventing deposition of droplets of urea water when the urea water droplets impinge against a porous plate disposed in an exhaust duct in this embodiment. Fig. 3 is an illustration for explaining spray impingement flux of urea water spray, which is decided depending on the positional relationship between a urea water injector and the porous plate in this embodiment. Fig. 4 is a graph for explaining, based on the relationship between the spray impingement flux and the temperature of exhaust gas, phenomena occurred when the urea water spray impinges against the porous plate in this embodiment.

In the overall construction, shown in Fig. 1, of the exhaust aftertreatment system according to this embodiment, exhaust gas 1 exhausted from a diesel engine passes through an exhaust duct 3 in which a group of catalysts for exhaust treatment are packed. After removal of particulate matters (PM) and nitrogen oxides (NOx), the cleaned exhaust gas 2 is released to the atmosphere. A flow passage through which the exhaust gas flows is desirably as narrow as possible from the viewpoint of saving a space. In general, however, the catalyst is of a structure having many narrow gas flow passages to increase a contact area between the catalyst and the exhaust gas, and such a structure tends to increase a pressure loss occurred when the exhaust gas flows. To ensure a sufficient contact area and to suppress the pressure loss, the exhaust duct 3 is preferably formed to have a larger flow-passage sectional area than other duct portions through which the exhaust gas just flows. In other words, the exhaust duct 3 including the group of catalysts packed therein has a larger sectional area than an upstream duct.

The group of catalysts used in the first embodiment of the present invention comprises an oxidation catalyst 4, a filter (Diesel Particulate Filter: DPF) 5 for removing the particulate matters, a denitration catalyst 6, and a catalyst 7 for ammonia treatment, which are arranged in the named order from the upstream side. However, other combination of catalysts than the illustrated one can also be optionally selected.

Particulate matters contained in the exhaust gas 1 of the diesel engine are removed by being deposited on filter material surfaces. Because the particulate matters are accumulated in the filter 5 with continued use, the accumulated particulate matters are periodically incinerated for reconditioning to prevent clogging of the filter. The particulate matters contain carbon as a main component, and combustion reaction of carbon can be caused by raising the temperature of the exhaust gas containing oxygen. The oxidation catalyst 4 is used to raise the temperature of the exhaust gas.

More specifically, when the filter 5 is reconditioned, engine control is performed such that a larger amount of not-yet-burnt materials are contained in the exhaust gas 1 exhausted from the diesel engine. Those not-yet-burnt materials are brought into oxidation reaction by the oxidation catalyst 4 to raise the temperature of the exhaust gas by combustion heat. As a result, the particulate matters accumulated in the filter 5 are ignited and moderately burnt for removal.

Nitrogen oxides (NOx) contained in the gas immediately after being exhausted from the engine are mainly made of nitrogen monoxide (NO). By oxidizing NO into nitrogen dioxide (NO₂) by the oxidation catalyst 4, the produced NO₂ acts as an oxidizer for the particulate matters in the filter and decreases the amount of the particulate matters. Further, the reaction of reducing NOx by ammonia in the denitration catalyst 6 is most rapidly progressed at a molar ratio of 1 : 1 between NO and NO₂ in a relatively low temperature state. It is therefore effective to control components of NOx in the exhaust gas to NO : NO₂ = 1 : 1 in molar ratio by the oxidation catalyst 4.

A urea water injector 10 injects urea water, and the injected urea water is hydrolyzed to produce ammonia. NOx is reduced in the denitration catalyst 6 by using the produced ammonia. The hydrolysis reaction of urea in that case is expressed by:

(NH₂)₂CO + H₂O → 2NH₃ + CO₂

As seen from the above chemical formula, urea reacts with water to produce ammonia and carbon dioxide, and 2 mol of ammonia is produced from 1 mol of urea. The reaction of reducing NOx by ammonia (NH₃) produced with the above reaction is expressed by:

NO + NO₂ + 2NH₃ → 2N₂ + 3H₂O

As seen from the above chemical formula, NOx is converted to nitrogen and water and becomes not harmful. Although reactions between NOx and ammonia (NH₃) occur in other ways, the above reaction has a maximum reaction rate under a condition of relatively low temperature. To promote the reaction, therefore, it is preferable to generate the above reaction. In other words, because 1 mol of NO and NO₂ are each consumed in the above reaction, controlling NOx in the exhaust gas so as to come closer to NO : NO₂ = 1 : 1 by the oxidation catalyst 4 is effective in promoting the denitration reaction.

Also, because 2 mol of ammonia (NH₃) is consumed for a total of NO and NO₂, i.e., NOx = 2 mol, ammonia serving as a reductant is ideally supplied at a molar ratio of NOx : NH₃ = 1 : 1. Looking at urea as a starting material, the urea is ideally supplied at a molar ratio of NOx : urea = 2 : 1.

If the reaction between ammonia and NOx is not ideally carried out, not-reacted ammonia comes out through the denitration catalyst 6. Ammonia is a harmful material for human bodies and must be prevented from being released to the atmosphere. The catalyst 7 for treating ammonia is hence provided. Generally, the catalyst 7 develops the function as an oxidation catalyst through chemical reaction that is expressed by:

2NH₃ + 3O₂ → NO + NO₂ + 3H₂O

As seen from the above chemical formula, ammonia is treated by converting the ammonia to NOx and water. Because this method produces NOx again, a total reduction rate of NOx is deteriorated in the whole of a system. For that reason, the catalyst 7 is preferably given with the function of promoting the reaction between ammonia and NOx in addition to the ammonia treatment function. In that case, ammonia is temporarily converted to NOx in the catalyst 7, but the NOx reacts with ammonia to produce nitrogen and water. Eventually, ammonia is converted to nitrogen and water. Thus, NOx density in the exhaust gas 2 finally coming out from the exhaust aftertreatment system can be further decreased by using, as the catalyst 7, a catalyst having those multi-functions.

The urea water injector 10 serves to not only inject urea water supplied from a urea water tank 8 and pressurized by a pump 9, but also to adjust the amount of the added urea water so that the urea water is added just in required amount. An injection port of the injector 10 is in the form of a small hole to increase the speed of injection of the urea water by utilizing the pressure applied from the pump 9. Droplets of the urea water formed upon the injection are atomized by utilizing inertial forces given with the highspeed injection. Also, by injecting the urea water in a manner to cause a swirl, the droplets can be further atomized by utilizing centrifugal forces. In addition, by repeatedly opening and closing an injection valve at a cycle of several to several tens Hz and by controlling a ratio of a valve-opening time to a valve-closing time, intermittent spray can be produced while the amount of the injected urea water is controlled.

The urea water injector 10 is directly mounted to the exhaust duct 3 such that spray formed by the urea water injected from the urea water injector 10 is mixed as it is into the exhaust gas. On that occasion, because the exhaust duct 3 is in a high-temperature state, there is a risk that the urea water inside the injector 10 may be overly heated to cause boiling and local precipitation of urea, thus resulting in clogging of the injector.

In consideration of such a risk, the injector 10 must be cooled to prevent boiling of the urea water inside the injector 10. A method of cooling the injector can be realized by covering a body including a valve member of the injection valve with a cooling channel, circulating the urea water through the cooling channel, and continuing the circulation of the urea water for cooling regardless of whether the urea water is injected or not, when the temperature of the exhaust gas is high. Thus, the direct mounting of the urea water injector 10 to the exhaust duct 3 requires cooling of the injector, but the direct mounting is advantageous in that the spray atomized by the injector can be directly mixed into the exhaust gas and the need of atomizing the droplets of the urea water by using compressed air is eliminated.

Further, because the spray of the urea water is sprayed to the exhaust duct 3, which has the sectional area enough to pack the group of catalysts therein, without narrowing the sectional area, a larger space can be utilized for bringing the injected droplets into contact with the exhaust gas. Stated another way, because a longer time is given for the droplets to contact with the exhaust gas and to receive heat for evaporation, the evaporation is progressed and the load imposed on the injector 10 is decreased. Consequently, the necessity of selecting the pump 9 with sufficiently high delivery pressure is eliminated and the system size can be reduced.

The droplets injected from the urea water injector 10 form spray 11 which is made up of a group of urea water droplets and impinges against a porous plate 12 in a first stage. The droplets injected from the injector 10 have a size distribution ranging from a small droplet size to a large droplet size. Because the droplet having a large size has a large mass and hence a large inertial force, it is less affected by the flowing force of the exhaust gas and is scattered almost linearly. Such linear scattering is decided substantially depending on the direction of advance of the droplets when the droplets exit the injection hole of the injector 10, and is spread in a conical shape with the injection hole positioned at an apex, thereby forming the spray 11. Thus, the shape of the spray 11 is decided substantially depending on the structure of the injector 10.

In the size distribution of the droplets, when a proportion of the larger-size droplets is large, spray penetration power (i.e., capability of the spray advancing in the initial spray direction against the flow of the exhaust gas) is strong and the spray is supplied to an area farther away from an injection point. Conversely, when a proportion of the smaller-size droplets is large, the spray penetration power is weak and the droplets are carried with the flow of the exhaust gas immediately after being injected, whereby the spray is supplied to an area closer to the injection point. To uniformly disperse the spray, therefore, the spray is preferably adjusted to have proper penetration power. One effective way is to adjust the number of times of injections per unit time. More specifically, by injecting the droplets intermittently while dividing the injection into a large number of cycles, each time the injection is interrupted, the penetration power of the spray is weakened and the spray tends to remain closer to the injection point in a repeated way. Thus, the cycle of opening and closing the injection valve is prolonged when the penetration power is desired to increase, and it is shortened when the penetration power is desired to decrease.

The porous plate 12 is disposed in a position reachable by the spray 11 and is inclined with respect to the direction of advance of the exhaust gas. The porous plate 12 can be formed of a punching plate manufactured by punching a large number of holes through a metal plate. Alternatively, the porous plate 12 may be formed of a metal plate having a number of cut-and-raised lugs, or an object (solid surface) having openings to allow passage of the droplets at a certain rate, such as a metal mesh. When the droplets arrive at the openings of the porous plate 12, those droplets pass through the openings. On the other hand, the droplets arriving at other portions than the openings impinge against the porous plate 12. A mechanism and method for preventing the droplets of the urea water, which have impinged against the porous plate 12 at that time, from depositing on the porous plate 12 will be described below with reference to Figs. 2, 3 and 4.

Fig. 2 is an illustration for explaining conditions under which the droplets are reflected without depositing on a plate surface and the droplets are deposited and fixated on the plate surface, when the urea water droplets (spray) 11 impinge against the porous plate 12. In Fig. 2, Tg represents the temperature of the exhaust gas, Tp represents the surface temperature of the porous plate 12, and Tu represents the boiling point of the urea water. When the difference (Tp - Tu) between the surface temperature of the porous plate and the boiling point of the urea water is larger than a critical temperature difference ΔTcr, the droplets of the urea water are reflected without depositing on the porous plate 12. When it is smaller than the critical temperature difference ΔTcr, the urea water droplets are deposited on the plate surface. Such a phenomenon is attributable to the following mechanism that has been found out by the inventors.

When the urea water droplets 11 impinge against the porous plate 12, a heat amount Qu is given from the porous plate 12 to the droplets. Corresponding to the heat amount deprived from the porous plate 12, the temperature of the porous plate becomes lower than that of the exhaust gas. Also, according to the law of heat transfer, a heat amount Qg is given from the exhaust gas to the porous plate in proportion to the product of the temperature difference (Tg - Tp) between the exhaust gas and the porous plate and a heat transfer rate *h*. When the deprived heat amount Qu and the given heat amount Qg are equal to each other, the porous plate 12 reaches an equilibrium state and its temperature is stabilized. Therefore, when the heat amount deprived by the droplets is comparatively large, the temperature of the porous plate becomes lower.

Considering that the temperature of the porous plate is higher than the boiling point of the urea water and the droplets having impinged against the porous plate cause boiling, it can be regarded that heat is transferred from the porous plate to the urea water by boiling heat transfer. Generally, the boiling heat transfer is divided into nucleate boiling and film boiling. The film boiling is caused when the temperature difference between the temperature of a solid-side surface and the boiling point of a liquid is larger than a critical temperature difference. In the case of the film boiling, the liquid and a solid wall (i.e., the urea water droplets 11 and the porous plate 12 in this embodiment) are not brought into direct contact with each other, and a gas layer is always interposed between them. This is attributable to the fact that because the temperature of the solid wall is high, the liquid causes boiling upon the liquid just coming close to the solid wall, and vapor produced by the boiling exists between the liquid and the solid wall.

The film boiling producing a gas phase interposed between the liquid and the solid wall has a characteristic that heat is harder to transfer than the nucleate boiling in which the liquid is contacted with the solid wall. Accordingly, when the film boiling is caused upon the impingement of the droplets against the porous plate, the temperature of the porous plate is maintained high. Also, by maintaining the temperature of the porous plate so high as to cause the film boiling, the droplets can be prevented from directly coming into contact with the porous plate, and the impinged droplets are reflected by the porous plate without depositing on it.

On the other hand, when the droplets 11 concentrically impinge against the plate (solid wall) and the plate surface temperature Tp lowers, the temperature difference between the plate surface temperature and the liquid boiling point upon the impingement of the droplets decreases, whereby the nucleate boiling is caused because the film boiling cannot be caused. Correspondingly, the heat amount transferred to the droplets is quickly increased and so is the heat deprived from the plate, thus resulting in a further drop of the plate temperature. When coming into such a state, the droplets are deposited on the plate surface. The droplets deposited on the plate surface remain there, while a water component of the urea water is evaporated at earlier timing, thus resulting in a state that urea is precipitated and deposited as a solid material on the plate. Further, if the urea having turned to the solid material is left to stand in a particular temperature zone, there occurs such a drawback that the urea is transformed to a harder solid material.

Fig. 3 illustrates, in enlarged scale, the positional relationship between the urea water injector 10 and the porous plate 12. In the illustrated example, the urea water is injected at an average flow rate *m*, and the spray 11 is spread at an angle 2θ. Assuming that the minimum distance from the spray injection point to the porous plate 12 in the first stage is r and an area of a fore end surface of the spray away from the injection point by that minimum distance is S, the area S is expressed by S = 2πr²(1 - cosθ), as shown in Fig. 3, based on the geometrical relation. The urea water is supplied to the fore end surface S in amount m per unit time.

Assuming an void rate of the porous plate 12 to be a, a part of the spray reaching the porous plate 12, which corresponds to the rate a, passes through the porous plate without impinging against it. Therefore, the amount of the spray impinging against the porous plate per unit time is given by m(1 - a). Since a value obtained by dividing that amount of the spray by the area S of the spray fore end surface represents the amount of the spray impinging against the porous plate per unit area, that value can be regarded as spray impingement flux and expressed by a formula shown in Fig. 3.

The spray deprives a certain amount of heat upon the impingement against the porous plate, and therefore the spray impingement flux represents the intensity of cooling for the porous plate. Namely, the porous plate is deprived of heat in amount proportional to the spray impingement flux per unit area. On the other hand, the heat received by the porous plate from the exhaust gas is expressed by a formula of (heat amount per unit area = temperature difference between the exhaust gas and the porous plate × heat transfer rate). Therefore, when the amount of the injected urea water is increased from a certain stable state to increase the spray impingement flux, the heat amount deprived for cooling increases and the temperature of the porous plate lowers. The temperature difference between the exhaust gas and the porous plate is thereby increased and so is the heat amount received from the exhaust gas. Eventually, when the heat amount received from the exhaust gas and the heat amount deprived for cooling are balanced with each other, the temperature drop of the porous plate is stopped and is stabilized again in a state where the temperature of the porous plate is lower than that in the previous stable state.

On that occasion, when the temperature of the porous plate is sufficiently higher than the boiling point of the urea water, the film boiling is caused upon the impingement of the spray and the heat amount deprived for cooling is just small. However, when the temperature of the porous plate lowers and the temperature difference between the temperature of the porous plate and the boiling point of the urea water decreases, the boiling mode is shifted from the film boiling to the nucleate boiling. Correspondingly, the heat amount deprived for cooling upon the impingement of the spray is abruptly increased and the temperature of the porous plate is quickly lowered. In such a state, the urea water cannot be kept from depositing on the porous plate.

Fig. 4 is a graph showing the results of dividing the above-described phenomena into various regions. In the graph of Fig. 4, the horizontal axis represents the temperature difference between the temperature of the exhaust gas and the boiling point of the urea water. In the side closer to the right, the temperature of the exhaust gas is higher and the temperature of the porous plate is more apt to hold at a higher level. The vertical axis of the graph represents the spray impingement flux. In the side closer to the top, the action tending to lower the temperature of the porous plate is enhanced. Assuming the case where the boiling mode is in the film boiling region under a certain condition of the exhaust gas temperature, when the amount of the injected urea water is increased from such a state, the plotted condition is moved upwards in the graph with an increase of the spray impingement flux.

Subsequently, the temperature of the porous plate lowers and the condition capable of causing the film boiling reaches a limit on a film boiling limit curve. When the spray impingement flux is further increased, the boiling mode is changed from the film boiling to the nucleate boiling, whereby the temperature of the porous plate is abruptly lowered and the urea water starts to be deposited on the porous plate. Thus, by designing the porous plate such that the film boiling region is always ensured in Fig. 4, the urea water can be prevented from depositing on the porous plate.

Stated another way, in the case where the temperature condition of the exhaust gas and the amount of the injected urea water are decided, the deposition of the urea water can be avoided by decreasing the spray impingement flux so as to come into the film boiling region. To that end, any action capable of decreasing the spray impingement flux is performed in consideration of parameters in the formula of Fig. 3. More specifically, the optional action is to increase the void rate a of the porous plate, to increase the distance from the injection point to the porous plate, and/or to enlarge the spread angle 2θ of the spray. As another method for preventing the deposition of the urea water, it is conceivable to increase the gradient of the film boiling limit curve in the graph of Fig. 4 such that higher spray impingement flux falls within the film boiling region. That method can be realized by increasing the heat transfer rate between the exhaust gas and the porous plate.

In the case of the heat transfer rate between the exhaust gas and the porous plate being high, when the spray impingement flux is increased and the temperature of the porous plate is going to lower, a larger amount of heat is received from the exhaust gas and the temperature drop of the porous plate is suppressed. Therefore, the spray impingement flux reaches, at its higher level, the limit of the film boiling, and the film boiling region can be given as a larger region. From that point of view, it is an important solution for the purpose of enlarging the film boiling region to make the exhaust gas flow along both sides of the porous plate such that the porous plate is able to receive heat at the both sides.

Also, inclining the porous plate with respect to the flow of the exhaust gas is effective in increasing the heat transfer rate between the exhaust gas and the porous plate. Further, the porous plate has the effect of suppressing growth of a temperature boundary layer due to discontinuity of the plate (wall) surface in the heat exchange between the porous plate and the exhaust gas, thereby increasing the heat transfer rate.

More specifically, the porous plate has a large number of edges (boundary hems of the plate defining individual holes formed in the porous plate) which serve as pointed ends intersecting the flow of the exhaust gas, and those edges each have a high local heat transfer rate. The presence of those edges in larger number leads to an increase of the overall heat transfer rate. Therefore, the porous plate preferably includes a larger number of edges. Comparing the porous plates having the same void rate, for example, it is more effective to decrease the size of each hole and the interval between the holes (namely, to decrease the interval between the holes, to thereby increase the number of edges and hence the heat amount received by the porous plate from the exhaust gas) from the viewpoint of enlarging the film boiling region. Also, decreasing the thickness of the porous plate is effective in enlarging the film boiling region. Assuming a surface of the porous plate undergoing the impingement of the spray to be a front surface, a rear surface of the porous plate just receives heat from the exhaust gas, and a slight temperature difference occurs between the front surface and the rear surface. Such a temperature difference is attributable to heat resistance occurred when the heat received by the rear surface is transferred to the front surface through thermal conduction. Thus, by decreasing the thickness of the porous plate and decreasing the heat resistance in the direction of thickness of the porous plate, the front surface temperature can be raised and the film boiling region can be enlarged.

Further, the intermittent injection of the spray from the injector 10 is effective in avoiding a drop of the front surface temperature and enlarging the film boiling region because the front surface can receive heat from the exhaust gas during a period in which the impingement of the spray against the porous plate is interrupted.

In addition, when the distance from the injection point to the porous plate is increased for the purpose of decreasing the spray impingement flux, it is advantageous to directly mount the injector to the exhaust duct and to not narrow the exhaust duct in the mounting position. This arrangement is also effective in preventing an increase of the pressure loss of the exhaust gas.

In Fig. 1, the filter 5 is disposed upstream of the urea water injector. When the distance between the urea water injector and the filter 5 is decreased for downsizing of the entire system, the urea water is preferably avoided from splashing the filter 5. For that purpose, it is advantageous, in the case of Fig. 1, that the porous plate 12 is arranged to incline downwards toward the right. With the arrangement that the surface of the porous plate 12 on the side subjected to the impingement of the spray is positioned to face downstream with respect to the flow of the exhaust gas, the urea water droplets having impinged against the porous plate 12 and having been reflected by the same are scattered in larger amount toward the downstream side with respect to the flow of the exhaust gas. As a result, the urea water droplets can be prevented from depositing on the filter 5, and the filter 5 can be kept from causing clogging or other trouble.

By arranging another porous plate 13 below the porous plate 12, the urea water droplets having passed through the porous plate 12 are caused to impinge against the porous plate 13, thus resulting in more efficient dispersion of the spray. The provision of the porous plates in multiple stages makes it possible to decrease the amount of the spray impinging against one porous plate and to increase the amount of the droplets passing through the porous plate. Such a structure can be realized by increasing the void rate of the porous plate. The larger void rate of the porous plate decreases the spray impingement flux, whereby the cooling with the impingement of the spray is weakened and the urea water can be more reliably prevented from depositing on the porous plate.

Also, the provision of the porous plates in multiple stages is advantageous in enabling the urea water spray to be more uniformly dispersed over the entirety of the exhaust gas flow passage. When the droplet size of the urea water spray is relatively large, the spray has larger penetration power for the flow of the exhaust gas and reaches the wall surface of the exhaust duct at a larger proportion. In that case, the concentration of the supplied urea water is increased near the exhaust duct wall, and ammonia supplied to the denitration catalyst 6 is increased near the exhaust duct wall and is decreased in other positions. In the position where the local ammonia concentration is lower than the concentration of NOx in the exhaust gas, the reductant becomes insufficient and the reduction reaction is lessened correspondingly. As a whole, the NOx reduction rate is deteriorated. Thus, by arranging the porous plates in multiple stages, such as the porous plates 12 and 13, and by uniformly dispersing the urea water without supplying the urea water to be concentrated in particular positions, the NOx reduction rate can be increased.

Further, by setting the void rate of the porous plate 13 (i.e., the porous plate disposed below the porous plate 12 in Fig. 1) to be smaller than that of the porous plate 12, it is possible to make uniform the amount of the droplets impinging against each porous plate, and to realize more uniform dispersion of the droplets. More specifically, only the droplets having passed through the porous plate 12 impinge against the porous plate 13. Therefore, if the porous plates 12 and 13 have the same void rate, the amount of the droplets impinging against the porous plate 13 is smaller than that impinging against the porous plate 12. Thus, a state enabling the droplets to impinge against both the porous plates in the same amount can be more approached by setting the void rate of the porous plate 13 to be smaller than that of the porous plate 12.

Assuming, for example, that the void rate of the porous plate 12 is 66% and the void rate of the porous plate 13 is 50%, it is estimated based on a simplified model that 34% of the spray having reached the porous plate 12 from the injector 10 impinges against the porous plate 12 and is distributed to the upper side of the porous plate 12, while 66% of the spray passes through the porous plate 12. Further, 50% of the 66%-spray impinges against the porous plate 13 and is distributed to a space between the porous plates 12 and 13, while the remaining spray is distributed to the lower side of the porous plate 13. Considering a cross-section of the exhaust duct 3 divided into three regions, i.e., the upper side of the porous plate 12, the space between the porous plates 12 and 13, and the lower side of the porous plate 13, the injected urea water is supplied to those three regions at 34%, 33% and 33%, respectively. This means that the spray is substantially uniformly distributed. When the void rate of the porous plate 13 is decreased, the porous plate 13 gives larger resistance against the passage of the exhaust gas than the porous plate 12. By inclining the porous plate 13 at a smaller angle with respect to the flow of the exhaust gas, therefore, the pressure loss of the exhaust gas can be decreased.

Stated another way, when the porous plates are disposed in multiple stages, decreasing the void rate and selecting a smaller inclination angle with respect to the flow of the exhaust gas for the porous plate positioned farther away from the injection point of the urea water is effective in uniformly dispersing the spray over the entire cross-section of the exhaust duct without increasing the pressure loss of the exhaust gas. While the porous plates are disposed in two stages in this embodiment, more uniform dispersion of the urea water can be realized by arranging the porous plates in three or more stages.

A flat plate 14 having no openings is disposed below the porous plate 13 to prevent the droplets having passed through all the porous plates from depositing on the wall surface of the exhaust duct 3. The exhaust duct 3 is exposed at the outer surface thereof to the atmosphere and its temperature is apt to lower. If the urea water droplets impinge against the exhaust duct, they tend to deposit and remain on the inner wall of the exhaust duct. Because the exhaust gas flows along both front and rear surfaces of the flat plate 14 disposed in the exhaust duct, the flat plat 14 is able to continuously receive heat from the exhaust gas and to easily maintain high temperature. Accordingly, deposition of the droplets can be more positively prevented by making the urea water droplets impinged against the flat plate 14 than by making the urea water droplets impinged against the wall surface of the exhaust duct.

Further, solid plate may be arranged in a position corresponding to a final one of the multiple stages of the porous plates. That arrangement can also avoid the droplets from reaching the wall surface of the exhaust duct and reliably prevent the deposition of the droplets. In addition, by arranging the flat plate 14 exactly parallel to the flow of the exhaust gas, the pressure loss of the exhaust gas can be decreased.

Some space is left so as to range from the region where the porous plates 12 and 13 and the flat plate 14 are disposed, to the position of the denitration catalyst 6. The presence of such a space is effective in not only ensuring a time required for evaporation of the injected urea water and production of ammonia due to the hydrolysis reaction, but also promoting mixing of ammonia and the exhaust gas, to thereby increase the NOx reduction rate.

While the first embodiment has been described, by way of example, in connection with the structure and arrangement of the porous plates 12 and 13 and the flat plate 14 as shown in Fig. 1, the porous plate is not an essential component in the first embodiment. For example, the function similar to that of the porous plate can also be obtained by arranging, instead of the porous plate, many small flat plates (having dimensions, e.g., a few tenths of those of the porous plate 12 shown in Fig. 1) in multiple stages obliquely with respect to the flow of the exhaust gas. In such a case, an impingement target of the urea water droplets is constituted only by the flat plates. The structure and arrangement of those flat plates are also included in this embodiment.

### (Second Embodiment)

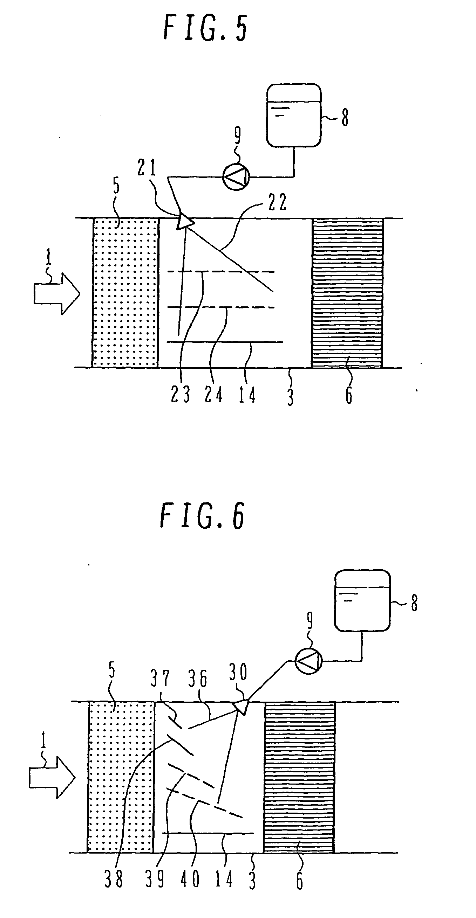

Fig. 5 is a schematic view showing the construction of a urea water dosing section in an exhaust aftertreatment system according to a second embodiment of the present invention. Components and members having the same functions as those in the first embodiment are denoted by the same reference numerals, and a description thereof is omitted here. Since the structures upstream of the filter 5 and downstream of the denitration catalyst 6 are the same as those in the first embodiment, those structures are omitted in Fig. 5.

In the second embodiment, the direction of injection from a urea water injector 21 is inclined toward the downstream side away from the vertical direction with respect to the flow of the exhaust gas. Such an arrangement can decrease a part of a spray 22 formed by the injection, which reaches the upstream side of the injection point with respect to the flow of the exhaust gas, and can prevent the spray from splashing the filter 5 even when the distance between the filter 5 and the injector 21 is decreased. As a result, the system size can be reduced.

Also, since the injection direction is inclined toward the downstream side away from the vertical direction with respect to the flow of the exhaust gas, the droplets impinging against porous plates 23 and 24 are more apt to be reflected downstream with respect to the flow of the exhaust gas. Therefore, the porous plates 23 and 24 can be arranged parallel to the flow of the exhaust gas as shown in Fig. 5. The arrangement of the porous plates 23 and 24 parallel to the flow of the exhaust gas is advantageous in decreasing the pressure loss of the exhaust gas and facilitating the manufacturing process.

### (Third Embodiment)

Fig. 6 is a schematic view showing the construction of a urea water dosing section in an exhaust aftertreatment system according to a third embodiment of the present invention. Components and members having the same functions as those in the first embodiment are denoted by the same reference numerals, and a description thereof is omitted here. Since the structures upstream of the filter 5 and downstream of the denitration catalyst 6 are the same as those in the first embodiment, those structures are omitted in Fig. 6.

In the third embodiment, the direction of injection from a urea water injector 30 is inclined toward the upstream side away from the vertical direction with respect to the flow of the exhaust gas. Plates 37, 38, 39 and 40 are arranged for impingement of a spray 36 injected from the injector 30, to thereby prevent the spray 36 from reaching the filter 5 disposed in the upstream side. Also, a plate 14 is disposed to prevent the spray 35 from depositing on the wall surface of the exhaust duct 3. The plates 37 and 38 are each formed of a flat plate having no openings to avoid the droplets from passing through the plate toward the upstream side. Further, the plates 37 and 38 are each formed of a plate having such a short length that the urea water spray impinges against each plate in smaller amount in comparison with heat received from the exhaust gas, for the purpose of preventing deposition of the urea water. The plates 39 and 40 are each formed of a porous plate to allow passage of a part of the droplets for treatment in multiple stages.

Since the injection direction is inclined toward the upstream side away from the vertical direction with respect to the flow of the exhaust gas, the spray 36 first advances upstream to impinge against the plates 37, 38, 39 and 40, and then advances downstream with respect to the flow of the exhaust gas. Therefore, the distance over which the droplets travel until reaching the denitration catalyst 6 after being injected from the injector 30 is increased. During a time prolonged corresponding to the increased travel distance of the droplets, the droplets can receive sufficient heat from the exhaust gas, thereby promoting evaporation of the urea water. As a result, ammonia is more efficiently produced and the denitration capability is further enhanced.

### (Fourth Embodiment)

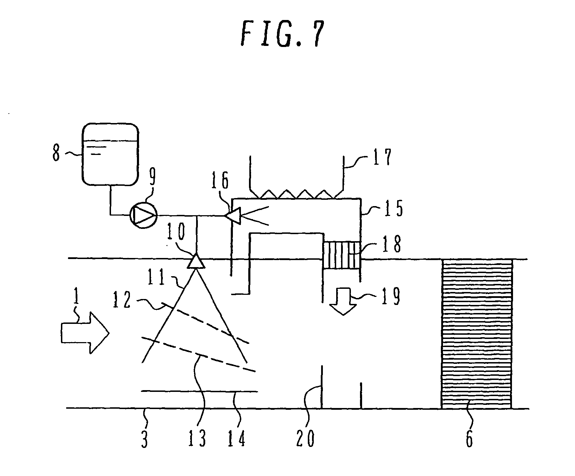

Fig. 7 is a schematic view showing the construction of a urea water dosing section in an exhaust aftertreatment system according to a fourth embodiment of the present invention. In this fourth embodiment, too, components and members having the same functions as those in the first embodiment are denoted by the same reference numerals, and a description thereof is omitted here. Since the structures upstream of the urea water dosing section and downstream of the denitration catalyst 6 are the same as those in the first embodiment, those structures are omitted in Fig. 7.

This fourth embodiment includes two urea water injectors, i.e., the injector 10 for directly injecting the urea water into the exhaust duct 3 and an injector 16 for injecting the urea water into a bypass pipe 15 through which a bypassed part of the exhaust gas flows. More specifically, the bypass pipe 15 bypasses a part of the exhaust gas 1. After dosing the urea water to the bypassed gas from the injector 16, the bypassed gas is heated by a heater 17 to promote evaporation of the injected urea water. Then, the bypassed gas passes through a hydrolysis catalyst 18 to promote the hydrolysis reaction of urea, thereby producing ammonia.

Gas 19 in a mixed state of the bypassed gas and ammonia is merged with a main flow of the exhaust gas at a position where the exhaust gas is narrowed by a venturi 20. Merging the bypassed flow and the main flow at the narrowed position is to establish balance between the pressure in the bypass pipe 15 and the pressure of the main flow of the exhaust gas. Because the pressure loss in the bypass pipe 15 is larger than that in the flow passage of the main exhaust gas, static pressure in the flow passage of the main exhaust gas is lowered correspondingly so as to ensure a satisfactory gas flow rate in the bypass pipe 15. With the mixing of the bypassed gas and the main exhaust gas, the exhaust gas mixed with ammonia is passed through the denitration catalyst 6 to remove NOx.

The temperature of the engine exhaust gas varies depending on the engine load. In the case of the exhaust gas temperature being high, even when the urea water is injected to the exhaust gas, the evaporation and the hydrolysis reaction of the urea water are quickly progressed due to heat received from the exhaust gas, and ammonia serving as a reductant is surely supplied to the denitration catalyst. However, when the exhaust gas temperature is low, conversion from the urea water to ammonia is not so progressed and the reduction reaction in the denitration catalyst is also not sufficiently progressed. In general, therefore, when the exhaust gas temperature is low, the NOx reduction rate is deteriorated.

To cope with such a drawback, the bypass pipe is provided and the conversion from the urea water to ammonia is promoted based on two factors, i.e., heating by the heater 17 and reaction promotion by the hydrolysis catalyst 18, thereby assisting removal of NOx at low temperature. Also, when the exhaust gas temperature is high, only the injector 10 for directly injecting the urea water to the exhaust gas is used without using the injector 16 in the bypass pipe 15, thereby avoiding extra energy consumption by the heater 17. Further, heating to assist the reaction at low temperature is performed only for the bypassed gas, instead of the whole of the exhaust gas, to decrease energy consumption by the heater 17.

In addition, since the injector 10 for directly injecting the urea water is disposed upstream of the venturi 20 where the bypassed gas 19 and the main exhaust gas are merged with each other, a sufficient time required for conversion of the injected urea water to ammonia can be ensured, which contributes to increasing the NOx reduction rate.

### (Fifth Embodiment)

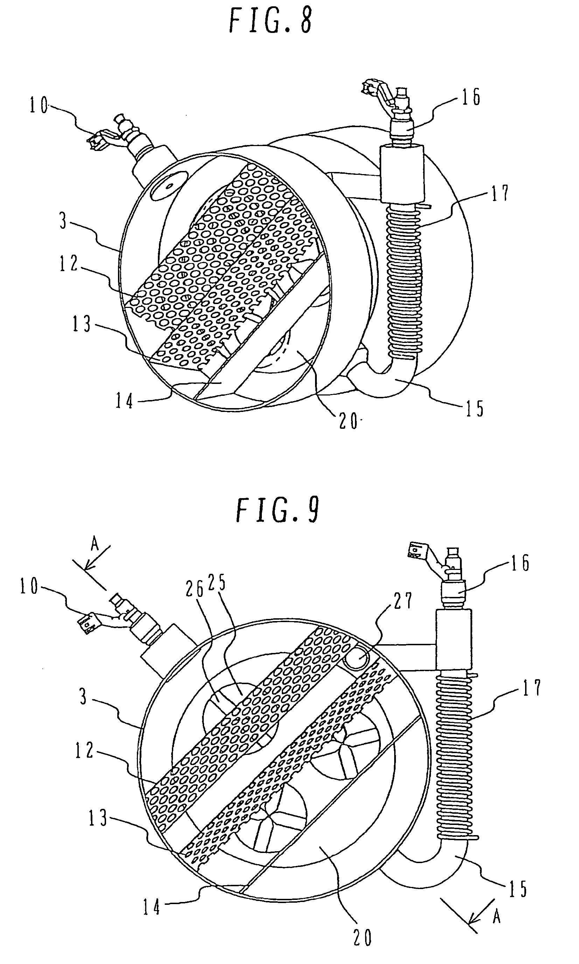

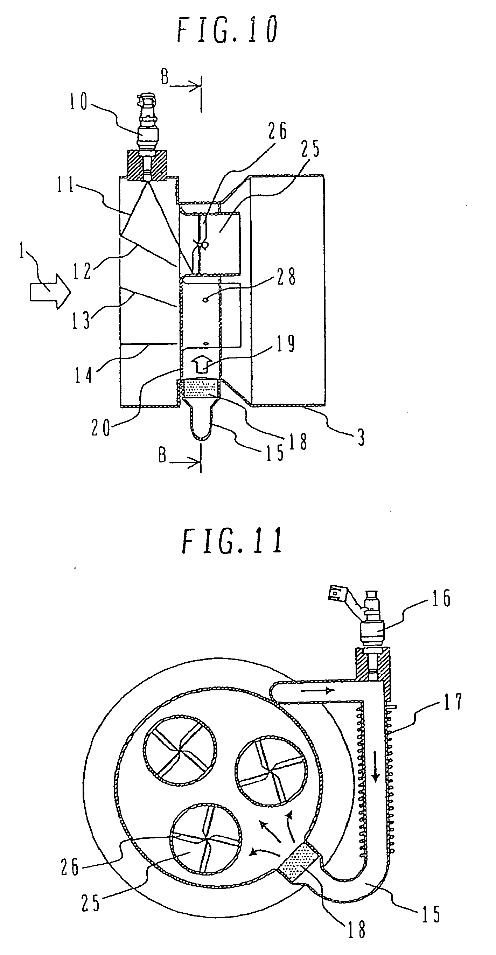

Fig. 8 is an appearance view showing the practical construction of a urea water dosing section in an exhaust aftertreatment system according to a fifth embodiment of the present invention. Fig. 9 is a front view showing the practical construction of the urea water dosing section in the fifth embodiment. Fig. 10 is a sectional view taken along line A-A shown in Fig. 9. Fig. 11 is a sectional view taken along line B-B shown in Fig. 10. In this fifth embodiment, components and members having the same functions as those in the fourth embodiment are denoted by the same reference numerals. In the structure of the fifth embodiment, the urea water is injected from an oblique upper-left position, as viewed in the front view of the injector for directly dosing the urea water to the exhaust gas.

The structure of injecting the urea water from the oblique upper-left position is intended to downsize the system. More specifically, considering vertical and horizontal dimensions of the urea water dosing section, if the injector 10 is arranged so as to inject the urea water from right above in the front view, the vertical dimension of the urea water dosing section is increased. Taking into such a drawback, the oblique arrangement of the injector 10 is employed to decrease the vertical dimension. This downsizing improves vehicle mountability of the exhaust aftertreatment system using the urea water. With the oblique arrangement of the injector 10, the porous plates 12 and 13 and the flat plate 14 for impingement of the spray are also obliquely arranged such that, as viewed in the front view of Fig. 9, an axis of the spray in the injection direction is perpendicular to each of the plates 12, 13 and 14.

The bypassed gas is introduced through the bypass passage (pipe) 15, starting from a bypass passage inlet 27 in Fig. 9, such that the urea water can be dosed to the bypassed gas from the urea water injector 16, while the bypassed gas flows as indicated by arrows in the sectional view of Fig. 11. The heater 17 heats the bypass pipe to evaporate the urea water dosed from the injector 16. The evaporated urea and water vapor pass through the hydrolysis catalyst 18 along with the bypassed gas for conversion of the urea to ammonia. As a result, the bypassed gas 19 containing ammonia is flown out through outlets which are given by a plurality of holes 28 formed in a main exhaust venturi passage 25, whereby the bypassed gas containing ammonia is mixed with the main exhaust gas.

More specifically, after flowing via the porous plates 12 and 13 and the flat plate 14, the main exhaust gas is restricted through the venturi passage 25 (which is disposed in three positions in the embodiment shown in Fig. 11) and then flows downward while being swirled by swirl vanes 26. On the other hand, the bypassed gas is branched from the main exhaust gas through the bypass passage inlet 27 formed upstream of the venturi 20. After being subjected to the hydrolysis treatment, the bypassed gas passes through the holes 28 and is merged with the main exhaust gas in the venturi passages 25 for mixing. To promote mixing of the bypassed gas and the main exhaust gas in such a process, the main exhaust gas is restricted by the venturi 20 so as to pass through the three venturi passages 25, and at the same time the main exhaust gas is swirled by the swirl vanes 26 disposed in each venturi passage 25. The bypassed gas is flown into the swirled exhaust gas for promoting the mixing.

As shown in the sectional view of Fig. 10, the urea water injected from the injector 10 impinges against the porous plates 12 and 13 and the flat plate 14 for uniform dispersion. The injected urea water and the exhaust gas are further mixed with each other while passing through the venturi passages 25. Therefore, heat is more efficiently transferred from the exhaust gas to the urea water droplets, thus promoting the evaporation and the hydrolysis of urea. Also, in consideration of that some of the urea water injected from the injector 10 is linearly advanced to flow into the venturi passages 25, the venturi passages 25 are arranged to allow efficient flow-in of such a directly introduced part of the urea water. While the three venturi passage 25 are provided in this embodiment, the number of the venturi passages 25 may be one, two, or four or more.

### (Sixth Embodiment)

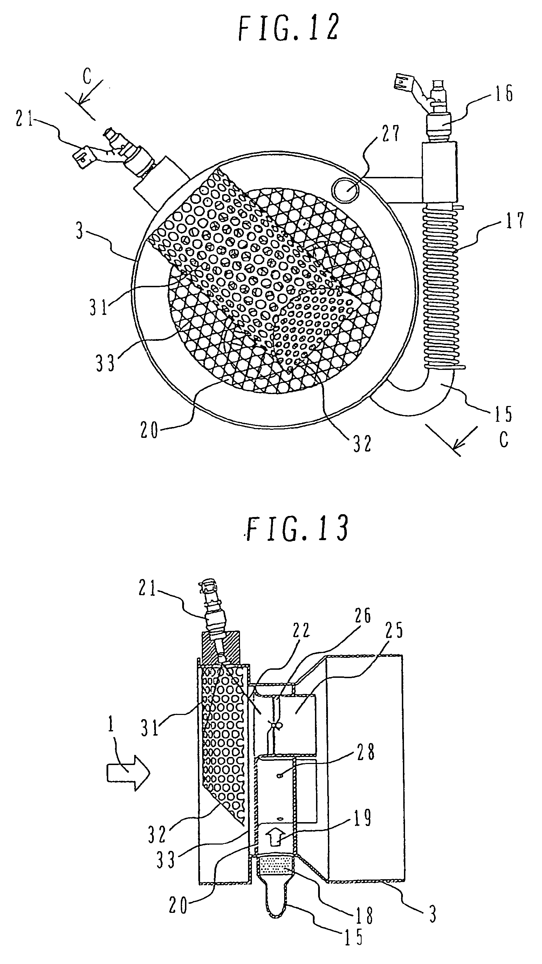

Fig. 12 is a front view showing the practical construction of a urea water dosing section in an exhaust aftertreatment system according to a sixth embodiment of the present invention. Fig. 13 is a sectional view taken along line C-C shown in Fig. 12. In this sixth embodiment, components and members having the same functions as those in the fifth embodiment are denoted by the same reference numerals, and a description thereof is omitted here. In this sixth embodiment, porous plates 31, 32 and 33 are used to disperse a urea water spray 22 injected from an injector 21. As seen from the section view of Fig. 13 taken along the line C-C, the injector 21 injects the spray in a direction inclined toward the downstream side from the vertical direction with respect to the flow of the exhaust gas.

The porous plate 31 is formed of a thin punching plate having a semi-cylindrical shape and is mounted to the exhaust duct 3. The semi-cylindrical porous plate 31 serves to not only prevent the spray 22 from scattering to the upstream side with respect to the flow of the exhaust gas 1, but also to prevent the droplets from excessively spreading in the lateral direction and from depositing on the wall surface of the exhaust duct 3. The porous plate 32 serves to not only prevent the spray 22 from reaching the wall surface of the exhaust duct 3 in the lower side in Fig. 13, but also to introduce the spray 22 to the two venturi passages 25 located in the side far away from the injector 21. The porous plate 35 prevents the spray 22 from directly depositing on the surface of the venturi 20. The porous plate 33 has many openings and is positioned away from the surface of the venturi 20, thus enabling the exhaust gas to flow on both sides of the porous plate 33. Therefore, the temperature of the droplets impinging against the porous plate 33 is less apt to lower than the case of the droplets directly reaching the surface of the venturi 20, and the deposition of the droplets can be more positively prevented.

Thus, this sixth embodiment is featured in the shape of the porous plate. Namely, the porous plate comprises the semi-cylindrical porous plate 31, the porous plate 32 obliquely arranged, as shown in Fig. 13, at a lower end of the semi-cylindrical porous plate 31, and the flat porous plate 33 arranged vertically with respect to the flow of the exhaust gas at a position away from the venturi passage.

### (Seventh Embodiment)

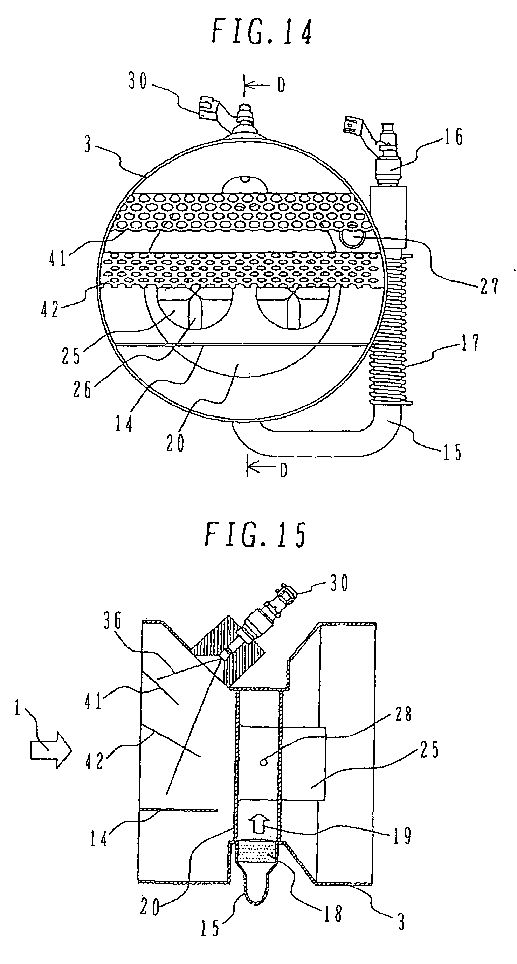

Fig. 14 is a front view showing the practical construction of a urea water dosing section in an exhaust aftertreatment system according to a seventh embodiment of the present invention. Fig. 15 is a sectional view taken along line D-D shown in Fig. 14. In this seventh embodiment, components and members having the same functions as those in the fifth embodiment are denoted by the same reference numerals, and a description thereof is omitted here.

In this seventh embodiment, two venturi passages 25 are provided, and an injector 30 is arranged at a top center of the exhaust duct 3 as shown in the front view of Fig. 14. Also, as shown in the sectional view of Fig. 15 taken along the line D-D, the injector 30 injects urea water in a direction inclined toward the upstream side from the vertical direction with respect to the flow of the exhaust gas. Further, two porous plates 41 and 42 are disposed to uniformly disperse a urea water spray 36 injected from the injector 30 and to prevent the spray 36 from scattering to the upstream side.

The height of the overall system is increased with the injector 30 arranged at the top center of the exhaust duct 3. By arranging the injector 30 in an inclined state, however, an increase of the system height is suppressed and the distance over which the spray travels is increased, whereby the evaporation of the urea water can be progressed and the denitration capability can be enhanced.

As described above, the exhaust aftertreatment system using the urea water, according to the present invention, is effective in removing NOx contained in exhaust gas of diesel engines, and is particularly suitable for use as a vehicular exhaust aftertreatment system requiring a size as small as possible. Also, since the urea water is dispersed into the exhaust gas without resorting atomization using compressed air, the exhaust aftertreatment system can be utilized for the exhaust treatment using the urea water even in environment where the compressed air is not available.

Thus, the above-described embodiments of the present invention can provide the various functions and actions given below. When the droplets injected from the injector have large size, the inertial force of each droplet is so strong that the droplet penetrates the flow of the exhaust gas without being carried with the flow and tends to deposit on the duct wall surface. However, since the urea water droplets are impinged against the porous plate and scattered, the dispersion of the urea water droplets can be promoted. The dispersed urea water droplets are evaporated while receiving heat from the exhaust gas. Further, the evaporated urea and water vapor cause the hydrolysis reaction to produce ammonia, and the produced ammonia is used as a reductant for reducing NOx. Accordingly, the promotion of dispersion of the urea water droplets promotes the dispersion of ammonia and hence promotes the reduction reaction of NOx.

Simultaneously, since the porous plate or the flat plate disposed near the duct inner surface prevents the urea water droplets from depositing on the duct wall surface, a possibility of deposition of the urea water droplets on the duct wall surface is eliminated even when the inertial force of the injected urea water is strong. Further, by increasing the speed of the injected droplets, an atomizing method can be practiced so as to atomize the urea water droplets without using compressed air.

Since the porous plate against which the droplets impinge allows the exhaust gas to pass through the openings formed therein, the porous plate does not cause a large pressure loss for the flow of the exhaust gas. Therefore, a larger effect of promoting the dispersion of the urea water droplets can be obtained with a smaller pressure loss than the case where the dispersion of ammonia is promoted by narrowing the flow passage of the exhaust gas.

When the urea water droplets are impinged against a plate, there is a possibility depending on the plate surface temperature that the droplets are deposited on the plate and the deposited urea water remains as a precipitate deposited on the plate, thus giving rise to a trouble. However, since the plate is formed of a porous plate and the exhaust gas flows along both front and rear surfaces of the porous plate, the urea water droplets can be prevented from depositing on the porous plate. Thus, the surface temperature of the porous plate can be maintained at a level sufficiently higher than the boiling point of the urea water. In other words, when the urea water droplets impinge against the porous plate, the urea water causes film boiling (also called Leidenfrost phenomenon). As a result, a gas phase is always present between the droplets and the plate, to thereby prevent deposition of the droplets on the porous plate.

In order to cause the film boiling, the plate surface temperature is required to be held at a level sufficiently higher than the boiling point of the urea water. From this point of view, flowing of the exhaust gas along both the front and rear surfaces of the porous plate is effective in enabling the porous plate to more easily receive heat from the exhaust gas and in maintaining the temperature of the porous plate at a high level. Further, when the urea water droplets impinge against the plate, the droplets deprive evaporation heat from the plate and act to lower the plate temperature. However, since the plate is formed of the porous plate and a part of the droplets passes through the porous plate without impinging against it, a cooling effect caused by the impingement of the droplets is suppressed and the temperature of the porous plate can be maintained at a high level.

Thus, by using the porous plate as the plate against which the urea water droplets impinge, and by allowing the exhaust gas to flow along both the front and rear surfaces of the porous plate, it is possible to prevent the deposition of the urea water droplets and to avoid a trouble caused by precipitation of urea. In addition, since the urea water droplets receive evaporation heat from the porous plate when they impinge against the porous plate, the evaporation is progressed with the received heat and atomization of the droplets is promoted correspondingly.

Moreover, since the porous plate is arranged obliquely with respect to the flow of the exhaust gas, the exhaust gas flows while contacting with the porous plate with higher certainty, and the porous plate can receive heat from the exhaust gas with higher efficiency. If solid plate is disposed, instead of the porous plate, obliquely with respect to the flow of the exhaust gas, the gas flow is disturbed to a large extent and the pressure loss is also increased. In the case of using the porous plate, the exhaust gas passes through the openings of the porous plate, and therefore the pressure loss is decreased. In addition, by arranging the porous plate to be inclined at such an angle that the surface of the porous plate on the side subjected to the impingement of the injected droplets faces downstream with respect to the flow of the exhaust gas, the droplets having impinged against the porous plate are reflected downstream with respect to the flow of the exhaust gas, whereby the droplets can be prevented from residing on the porous plate and a temperature drop of the porous plate can be avoided. Further, the droplets are more easily carried with the flow of the exhaust gas, and dispersion of the droplets is promoted.

By arranging the porous plate for dispersing the injected droplets in multiple stages, the droplets having passed through the porous plate in an upper stage can be impinged against the porous plate in a lower stage. Therefore, even when the void rate of each porous plate is increased, the probability of impingement of the droplets against the porous plates can be maintained high as a whole. A larger void rate of each porous plate is advantageous in that because the droplets pass through the porous plate at a larger proportion, a temperature drop of the porous plate caused by the impingement of the droplets is decreased and the temperature of the porous plate can be maintained high. It is hence possible to prevent the urea water from depositing on the porous plate and causing precipitation of urea, and to realize the treatment for cleaning the exhaust gas with higher efficiency.

Further, a plate is disposed near the inner surface of the exhaust duct such that both front and rear surfaces of the plate are exposed to the exhaust gas. The exhaust duct is exposed at its outer surface to the atmosphere and is brought into such a state that the temperature of the exhaust duct is lower than that of the exhaust gas and the urea water droplets having impinged against the exhaust duct is more apt to deposit thereon. In contrast, since the temperature of the plate exposed to the exhaust gas at the both surfaces thereof can be maintained at a level comparable to the temperature of the exhaust gas, the urea water droplets can be avoided from depositing on the plate even when they impinge against it, and the deposition of the urea water on the wall surface of the exhaust duct can be prevented.

By intermittently injecting the urea water, the spray is not continuously impinged against the plate disposed inside the exhaust duct, and portions of the plate subjected to the impingement of the spray can receive heat from the exhaust gas during a period in which the impingement of the spray is interrupted. As a result, the plate temperature having lowered upon the impingement of the spray can be restored, and the deposition of the urea water can be prevented by holding the plate at high temperature. In addition, by adjusting the number of times of injections per unit time when the urea water is intermittently injected, the spray can be uniformly dispersed into the exhaust duct.

In short, the features of the present invention are summarized as follows. In the exhaust aftertreatment system comprising the injector for injecting the urea water into the engine exhaust duct, and the denitration catalyst through which the exhaust gas flows, the exhaust aftertreatment system cleans nitrogen oxides in the exhaust gas with the reduction reaction occurred on the denitration catalyst while using ammonia produced with hydrolysis reaction of the urea water injected from the injector. A solid surface is disposed in a space of the exhaust duct through which droplets of the urea water injected from the injector travel before reaching a wall surface of the exhaust duct, and the urea water droplets are impinged against the solid surface, whereby the direction of travel of the droplets is changed for dispersion of the urea water droplets into the exhaust gas. Further, the solid surface receives heat from the exhaust gas and maintains high temperature, to thereby prevent deposition of the urea water.

The solid surface is formed by a porous plate such that a part of the urea water passes through the porous plate, while the remaining urea water impinges against the surface of the porous plate. Further, the porous plate is arranged obliquely with respect to the flow of the exhaust gas such that a surface of the porous plate on the side subjected to impingement of the urea water droplets faces downstream with respect to the flow of the exhaust gas. Still further, the porous plate is provided plural and the plural porous plates are arranged in multiple stages in such a positional relationship that the urea water droplets having passed through one porous plate are able to impinge against another porous plate.

A plate having front and rear surfaces exposed to the exhaust gas is disposed near the inner wall surface of the exhaust duct, whereby the urea water droplets injected from the injector are prevented from directly impinging against the inner wall surface of the exhaust duct. Further, the urea water is intermittently injected from the injector such that the spray of the urea water is not continuously impinged against the porous plate disposed in the exhaust duct. In addition, by utilizing the fact that penetration power of the spray is decreased each time the urea water is interrupted, the number of times of injections per unit time is adjusted so as to uniformly disperse the spray.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An exhaust aftertreatment system comprising an injector (10) for injecting urea water into an engine exhaust duct (3), and a denitration catalyst (6) disposed downstream of said injector (10) with respect to a flow of exhaust gas (1), said exhaust aftertreatment system reducing nitrogen oxides in the exhaust gas (1) by said denitration catalyst (6) while using ammonia produced from the urea water injected from said injector (10),
wherein said injector (10) injects the urea water along a direction of the flow of the exhaust gas (1) within said exhaust duct (3); and
a solid object is disposed in a space of said exhaust duct (3) such that droplets (11) of the urea water injected from said injector (10) impinge against said solid object before reaching a wall surface of said exhaust duct (3),
**characterized in that**
said solid object is a perforated porous plate, (12) disposed in at least two stages in a direction in which the urea water droplets (11) are injected.

2. The exhaust aftertreatment system according to Claim 1, wherein said solid object is arranged obliquely with respect to the flow of the exhaust gas (1), and
a surface of said solid object on the side subjected to impingement of the urea water droplets (11) is arranged to face downstream with respect to the flow of the exhaust gas (1).

3. The exhaust aftertreatment system according to Claim 1, wherein said porous plate (12) is arranged in multiple stages such that the urea water droplets (11) having passed through one porous plate impinge against another porous plate (12).

4. The exhaust aftertreatment system according to Claim 1, wherein solid plate is disposed between said porous plates disposed in at least two stages and the wall surface of said exhaust duct (3).

5. The exhaust aftertreatment system according to any one of Claims 1 to 4, wherein the urea water is intermittently injected from said injector (10) while adjusting the number of times of injections per unit time.

6. The exhaust aftertreatment system according to any one of Claims 1 to 5, wherein the injected urea water droplets (11) form spray, and the spray impinges against said solid object at a predetermined spread angle.

7. An exhaust aftertreatment system comprising a first injector (10) for injecting urea water into an engine exhaust duct (3), and a denitration catalyst (6) disposed downstream of said first injector with respect to a flow of exhaust gas (1), said exhaust aftertreatment system reducing nitrogen oxides in the exhaust gas (1) by said denitration catalyst while using ammonia produced from the urea water injected from said first injector (10),
wherein said first injector (10) injects the urea water along a direction of the flow of the exhaust gas within said exhaust duct (3);
a solid object is disposed in a space of said exhaust duct (3) such that droplets (11) of the urea water injected from said first injector impinge against said solid object before reaching a wall surface of said exhaust duct (3),
**characterised in that**
a bypass passage (15) is formed to bypass a part of the exhaust gas (1) from said exhaust duct (3) and to return the bypassed gas to said exhaust duct (3) at a position between said first injector (10) and said denitration catalyst (6); and
a second injector (16) is provided for injecting the urea water into said bypass passage (15) with a heater and a hydrolysis catalyst (18) both disposed downstream of said second injector (16).

8. The exhaust aftertreatment system according to Claim 7, wherein a venturi (20) is disposed in said exhaust duct (3) upstream of said denitration catalyst (6), and
the bypassed gas from said bypass passage (15) is merged with the flow of the exhaust gas (1) in a position at which the flow of the exhaust gas (1) is restricted by said venturi (20).

9. The exhaust aftertreatment system according to Claim 8, wherein said solid object disposed in said exhaust duct comprises a first porous plate (12) constituted by forming a punching plate into a semi-cylindrical shape, a second porous plate (13) disposed at a lower end of said first porous plate and inclined such that a surface of said second porous plate (13) on the side subjected to impingement of the urea water droplets (11) faces downstream with respect to the flow of the exhaust gas (1), and a third porous plate arranged in said exhaust duct (3) in a state away from a surface of said venturi (20).

## Patentansprüche

1. Abgas-Nachbehandlungssystem mit einer Einspritzvorrichtung (10) zum Einspritzen einer Harnstoff-Wasser-Lösung in eine Motorabgasleitung (3) und einem Denitrationskatalysator (6), der stromabwärts der Einspritzvorrichtung (10) bezüglich eines Flusses von Abgas (1) angebracht ist, wobei das Abgas-Nachbehandlungssystem Stickstoffoxide im Abgas (1) durch den Denitrationskatalysator (6) unter Verwendung von Ammoniak reduziert, das aus der von der Einspritzvorrichtung (10) eingespritzten Harnstoff-Wasser-Lösung erzeugt wurde,
wobei die Einspritzvorrichtung (10) die Harnstoff-Wasser-Lösung längs einer Richtung des Flusses des Abgases (1) in der Abgasleitung (3) einspritzt; und
ein festes Objekt in einem Raum der Abgasleitung (3) so angebracht ist, dass Tröpfchen (11) der von der Einspritzvorrichtung eingespritzten Harnstoff-Wasser-Lösung gegen das feste Objekt schlagen, bevor sie eine Wandoberfläche der Abgasleitung (3) erreichen,
**dadurch gekennzeichnet, dass**
das feste Objekt eine perforierte poröse Platte (12) ist, die in zumindest zwei Stufen in einer Richtung angebracht ist, in der die Harnstoff-Wasser-Lösungströpfchen (11) eingespritzt werden.

2. Abgas-Nachbehandlungssystem nach Anspruch 1, wobei das feste Objekt bezüglich des Flusses des Abgases (1) schräg angeordnet ist, und
eine Oberfläche des festen Objekts auf der Seite, die dem Aufschlag der Harnstoff-Wasser-Lösungströpfchen (11) ausgesetzt ist, so angeordnet ist, dass sie bezüglich des Flusses des Abgases (1) stromabwärts gewandt ist.

3. Abgas-Nachbehandlungssystem nach Anspruch 1, wobei die poröse Platte (12) in mehreren Stufen so angeordnet ist, dass die Harnstoff-Wasser-Lösungströpfchen (11) gegen eine andere poröse Platte (12) schlagen, nachdem sie durch eine poröse Platte hindurchgegangen sind.

4. Abgas-Nachbehandlungssystem nach Anspruch 1, wobei eine feste Platte zwischen den porösen Platten, die in zumindest zwei Stufen angebracht sind, und der Wandoberfläche der Abgasleitung (3) angebracht ist.

5. Abgas-Nachbehandlungssystem nach irgendeinem der Ansprüche 1 bis 4, wobei die Harnstoff-Wasser-Lösung von der Einspritzvorrichtung (10) intermittierend eingespritzt wird, während die Anzahl der Male der Einspritzungen pro Zeiteinheit eingestellt wird.

6. Abgas-Nachbehandlungssystem nach irgendeinem der Ansprüche 1 bis 5, wobei die eingespritzten Harnstoff-Wasser-Lösungströpfchen (11) einen Sprühnebel bilden und der Sprühnebel in einem vorgegebenen Verbreitungswinkel gegen das feste Objekt schlägt.

7. Abgas-Nachbehandlungssystem mit einer ersten Einspritzvorrichtung (10) zum Einspritzen einer Harnstoff-Wasser-Lösung in eine Motorabgasleitung (3) und einem Denitrationskatalysator (6), der stromabwärts der ersten Einspritzvorrichtung bezüglich eines Flusses von Abgas (1) angebracht ist, wobei das Abgas-Nachbehandlungssystem Stickstoffoxide im Abgas (1) durch den Denitrationskatalysator unter Verwendung von Ammoniak reduziert, das aus der von der Einspritzvorrichtung (10) eingespritzten Harnstoff-Wasser-Lösung erzeugt wurde,
wobei die erste Einspritzvorrichtung (10) die Harnstoff-Wasser-Lösung längs einer Richtung des Flusses des Abgases in der Abgasleitung (3) einspritzt;
ein festes Objekt in einem Raum der Abgasleitung (3) so angebracht ist, dass Tröpfchen (11) der von der ersten Einspritzvorrichtung eingespritzten Harnstoff-Wasser-Lösung gegen das feste Objekt schlagen, bevor sie eine Wandoberfläche der Abgasleitung (3) erreichen,
**dadurch gekennzeichnet, dass**
ein Umgehungsdurchgang (15) ausgebildet ist, um einen Teil des Abgases (1) aus der Abgasleitung (3) umzuleiten und das umgeleitete Gas an einer Position zwischen der ersten Einspritzvorrichtung (10) und dem Denitrationskatalysator (6) zur Abgasleitung (3) zurückzuleiten; und
eine zweite Einspritzvorrichtung (16) zum Einspritzen der Harnstoff-Wasser-Lösung in den Umgehungsdurchgang (15) mit einer Heizvorrichtung und einem Hydrolysekatalysator (18) vorgesehen ist, die beide stromabwärts der zweiten Einspritzvorrichtung (16) angebracht sind.

8. Abgas-Nachbehandlungssystem nach Anspruch 7, wobei ein Venturi (20) in der Abgasleitung (3) stromabwärts des Denitrationskatalysators (6) angebracht ist, und
das umgeleitete Gas vom Umgehungsdurchgang (15) mit dem Fluss des Abgases (1) an einer Position zusammenfließen gelassen wird, an der der Fluss des Abgases (1) vom Venturi (20) eingeschränkt wird.

9. Abgas-Nachbehandlungssystem nach Anspruch 8, wobei das in der Abgasleitung angebrachte feste Objekt eine erste poröse Platte (12), die durch Ausbilden einer Stanzplatte zu einer halbzylindrischen Form aufgebaut ist, eine zweite poröse Platte (13), die an einem unteren Ende der ersten porösen Platte angebracht und so geneigt ist, dass eine Oberfläche der zweiten porösen Platte (13) auf der Seite, die dem Aufschlag der Harnstoff-Wasser-Lösungströpfchen (11) ausgesetzt ist, bezüglich des Flusses des Abgases (1) stromabwärts gewandt ist, und eine dritte poröse Platte umfasst, die in der Abgasleitung (3) in einem von einer Oberfläche des Venturis (20) abgewandten Zustand angeordnet ist.

## Revendications

1. Système de post-traitement des gaz d'échappement comprenant un injecteur (10) pour injecter un mélange urée - eau dans un conduit de gaz d'échappement du moteur (3), et un catalyseur de dénitrification (6) disposé en aval dudit injecteur (10) par rapport à un flux de gaz d'échappement (1), ledit système de post-traitement des gaz d'échappement réduisant les oxydes d'azote dans le gaz d'échappement (1) grâce audit catalyseur de dénitrification (6) tout en utilisant l'ammoniaque produite à partir du mélange eau - urée injecté par ledit injecteur (10),
Dans lequel ledit injecteur (10) injecte le mélange eau - urée en direction du flux de gaz d'échappement (1) à l'intérieur dudit conduit de gaz d'échappement (3) ; et
un objet solide est disposé dans un espace dudit conduit de gaz d'échappement (3) de sorte que les gouttelettes (11) du mélange eau - urée, injecté par ledit injecteur (10), bombardent ledit objet solide avant d'atteindre une surface de la paroi dudit conduit de gaz d'échappement (3),
**caractérisé en ce que**
ledit objet solide est une plaque poreuse perforée (12), disposée sur au moins deux étages dans une direction dans laquelle les gouttelettes (11) du mélange eau - urée sont injectées.

2. Le système de post-traitement des gaz d'échappement selon la revendication 1, dans lequel ledit objet solide est placé en position oblique par rapport au flux de gaz d'échappement (1) et
une surface dudit objet solide sur le côté soumis au bombardement des gouttelettes (11) du mélange eau - urée est disposée pour faire face au côté amont par rapport au flux de gaz d'échappement (1).

3. Le système de post-traitement des gaz d'échappement selon la revendication 1, dans lequel ladite plaque poreuse (12) est disposée sur de multiples étages de sorte que les gouttelettes (11) de mélange eau -urée ayant traversé une plaque poreuse bombardent une autre plaque poreuse (12).

4. Le système de post-traitement des gaz d'échappement selon la revendication 1, dans lequel la plaque solide est disposée entre lesdites plaques poreuses, disposées sur au moins deux étages, et la surface de la paroi dudit conduit de gaz d'échappement (3).

5. Le système de post-traitement des gaz d'échappement selon l'une quelconque des revendications 1 à 4, dans lequel le mélange eau - urée est injecté par intermittence par ledit injecteur (10) tout en ajustant le nombre d'injections par unité de temps.

6. Le système de post-traitement des gaz d'échappement selon l'une quelconque des revendications 1 à 5, dans lequel les gouttelettes (11) du mélange eau - urée forment une pulvérisation et la pulvérisation bombarde ledit objet solide formant un angle d'étalement prédéterminé.

7. Système de post-traitement des gaz d'échappement, comprenant un premier injecteur (10) pour injecter le mélange eau - urée dans un conduit de gaz d'échappement du moteur (3), et un catalyseur de dénitrification (6) disposé en aval dudit premier injecteur par rapport à un flux de gaz d'échappement (1), ledit système de post-traitement des gaz d'échappement réduisant les oxydes d'azote dans le gaz d'échappement (1) grâce audit catalyseur de dénitrification tout en utilisant l'ammoniaque produite à partir du mélange eau - urée injecté par ledit premier injecteur (10),
dans lequel ledit premier injecteur (10) injecte le mélange eau - urée en direction du flux de gaz d'échappement à l'intérieur dudit conduit de gaz d'échappement (3) ;
un objet solide est disposé dans un espace dudit conduit de gaz d'échappement (3) de sorte que les gouttelettes (11) du mélange eau - urée, injecté par ledit premier injecteur, bombardent ledit objet solide avant d'atteindre une surface de paroi dudit conduit de gaz d'échappement (3),
**caractérisé en ce que**
un passage de dérivation (15) est formé pour dériver une partie du gaz d'échappement (1) provenant dudit conduit de gaz d'échappement (3) et pour renvoyer le gaz dérivé dans ledit conduit de gaz d'échappement (3) vers un endroit situé entre ledit premier injecteur (10) et ledit catalyseur de dénitrification (6) ;
un deuxième injecteur (16) est prévu pour injecter le mélange eau - urée dans ledit passage de dérivation (15), un élément chauffant et un catalyseur d'hydrolyse (18) étant disposés tous deux en aval dudit deuxième injecteur (16).

8. Le système de post-traitement des gaz d'échappement selon la revendication 7, dans lequel un diffuseur type venturi (20) est disposé dans ledit conduit de gaz d'échappement (3) en amont dudit catalyseur de dénitrification (6), et
le gaz dérivé depuis ledit passage de dérivation (15) est mêlé avec le flux de gaz d'échappement (1) en un endroit où le flux de gaz d'échappement (1) est restreint par ledit diffuseur type venturi (20).

9. Le système de post-traitement du gaz d'échappement selon la revendication 8, dans lequel ledit objet solide disposé dans ledit conduit de gaz d'échappement comprend une première plaque poreuse (12) constituée en formant une plaque de perforation en une forme semi cylindrique, une deuxième plaque poreuse (13) disposée à une extrémité inférieure de ladite première plaque poreuse et inclinée de sorte qu'une surface de ladite deuxième plaque poreuse (13) sur le côté soumis au bombardement des gouttelettes (11) de mélange eau - urée soit en face du côté aval par rapport au flux de gaz d'échappement (1), et une troisième plaque poreuse disposée dans ledit conduit de gaz d'échappement (3) dans une position éloignée d'une surface dudit diffuseur de type venturi (20).
